# EUROPÄISCHE PATENTSCHRIFT

(11) **EP 1 112 770 B1**
(45) Veröffentlichungstag und Bekanntmachung des Hinweises auf die Patenterteilung: **02.03.2005**
(21) Anmeldenummer: 00128770.5
(22) Anmeldetag: 30.12.2000
(51) Int. Cl.: B01D 29/01, B01D 29/11, B01D 29/15, B01D 29/23

(54) **Poröse Funktionsplatte**
Porous fonctional plate
Plaque fonctionnelle poreuse

(30) Priorität: 30.12.1999 DE 19964037; 28.01.2000 DE 10003755
(43) Veröffentlichungstag der Anmeldung: 04.07.2001
(73) Patentinhaber: Isfahani, Saeed, 70839 Gerlingen (DE)
(72) Erfinder: Isfahani, Saeed, 70839 Gerlingen (DE)
(74) Vertreter: Patentanwälte Hosenthien-Held und Dr. Held

(56) Entgegenhaltungen:
- DE-A- 19 639 752
- DE-U- 8 715 656
- US-A- 4 078 965
- US-A- 4 761 323
- US-A- 5 656 166

## Beschreibung

Die Erfindung geht aus von einer Funktionsplatte mit Durchlässen zur Nutzung für gasförmige und flüssige Medien nach der Gattung des Hauptanspruchs und einem Herstellungsverfahren derselben nach Anspruch 10. Derartige Funktionsplatten werden in erster Linie als Filter verwendet, wobei es sich keinesfalls um nur ebene Platten handelt, sondern diese können auch gewölbt sein, bspw. in Form eines Rohres, bei dem das zu bearbeitende Material radial von innen nach außen oder von außen nach innen strömt. Auch die Herstellung dieser Funktionsplatten kann in unterschiedlichster Weise erfolgen, maßgebend ist, daß es sich um mindestens zwei Schichten handelt, die eine solche Funktionsplatte aufweist, nämlich einem Gerüst, das als Trägerplatte dient und einer auf diesem angeordneten Kontaktschicht, mit wesentlich feineren Durchlässen als jene Durchlässe oder Perforation im Gerüst. Das als Trägerplatte dienende Gerüst kann aus flexiblem oder auch steifem Material bestehen, maßgebend ist, daß es die Trägerfunktion übernimmt, im Grenzfall in Art einer Armierung der Kontaktschicht, bspw. in Form von Glasfasern oder Glasfasergeweben.

Bei einer bekannten Funktionsplatte der gattungsgemäßen Art (EP 0 352 404 A1) dient als Gerüst ein mit Öffnungen versehener Stützkörper, der rohrförmig ist und über den ein Filtergewebe gespannt ist, wobei zwischen Stützkörper und Filtergewebe Nocken angeordnet sind, die ein Aufliegen des Filtergewebes am Stützkörper ermöglichen, ohne den Gesamtfilterdurchströmquerschnitt auf die Durchgänge des Filtergewebes zu reduzieren, die den Öffnungen des Stützkörpers entsprechen würden. Wären keine Nocken vorhanden, so würde das Filtergewebe direkt auf dem Rohr aufliegen, so daß als Durchströmquerschnitt des Filtergewebes nur die Flächen desselben in Frage kämen, die somit nur den Öffnungen des Stützkörpers entsprechen würden. Durch den durch die Nocken gegebenen Abstand wird hingegen die Durchströmfläche des Filtergewebes entsprechend vergrößert.

Eine andere bekannte Funktionsplatte (DE-U-87 15 656) dient an einem Luftkissentisch, wobei auf einer Siebplatte, unter welcher die Druckluft zugeführt wird, eine aus Weichmaterial bestehende Gleitschicht aufgeklebt ist, die gleichmäßig luftdurchlässig ist, in Form eines Filz- oder Vlies-Belags. Zwar wird hier die Luft innerhalb dieses Weichmaterials einigermaßen gleichmäßig verteilt, es wird jedoch aufgrund des Aufklebens der Querschnitt der Durchgangsöffnungen der Siebplatte entsprechend der Dichte dieses Weichmaterials reduziert, wobei der Klebstoff nicht unproblematisch eine zusätzliche Verengung bewirken könnte.

Aus der US 5,656,166 ist eine Filtervorrichtung mit einem als Träger dienenden Gerüst und beiderseits hierauf angebrachten Wandbereichen bekannt, wobei die Herstellung mittels Sintern, bei sich ändernder Porengröße in mehreren Schritten, erfolgt. Beim Träger kann es sich beispielsweise um ein Lochblech oder um ein Drahtgitter handeln. Eine derartige Filtervorrichtung läßt noch Wünsche offen.

Die US 4,761,323 betrifft einen als Tiefenfilter wirkenden Rußfilter, der einen Träger mit filzartigen Filterelementen aufweist. Die Fasern des Filterelements sind miteinander und an dem Träger durch eine amorphe Beschichtung verbunden, die mittels CVD oder Abscheidung aus einer Lösung aufgebracht ist. Ein derartiges Filter läßt noch Wünsche offen.

Die erfindungsgemäße Funktionsplatte zur Nutzung für gasförmige und flüssige Medien und deren Herstellungsverfahren mit den kennzeichnenden Merkmalen des Hauptanspruchs hat demgegenüber den Vorteil, einer nicht nur äußerst günstigen Herstellung, sondern eines breiten Anwendungsbereiches. Durch die Verwendung von porösem Material als Kontaktschicht wird der Querschnitt der Durchgangsöffnungen (Perforationen) des Gerüstes nur unwesentlich reduziert, da die durch diese Durchgangsöffnungen durchströmenden Gase und Flüssigkeiten nicht nur axial die Kontaktschicht durchdringen, sondern unmittelbar nach Austritt aus den Durchgangsöffnungen auch radial die poröse Kontaktschicht durchdringen können. Maßgebend ist hierfür, daß die poröse Kontaktschicht mit ihren Kapillaren mit den Durchgangsöffnungen des Gerüstes strömungstechnisch korrespondieren. Zwar kann die Kontaktschicht aus unterschiedlichstem Material bestehen - je nach vorgesehenem Einsatz - sie muß allerdings porös sein, um die erforderliche Durchgängigkeit auch für feine Kapillaren zu gewährleisten.

Eine weitere vorteilhafte Ausgestaltung der Erfindung ist die Anwendung zur Führung von dünnen Werkzeugen, wie Sägeblättern oder dergleichen und/oder zur Unterbindung von Schwingungen an Werkzeugen, Folien, oder dergleichen. Aufgrund der beinahe Reibungsfreiheit, die durch ein solches Luftkissen zustande kommt, wird dieses erfindungsgemäB zur Unterbindung von Schwingungen bei sehr dünnen Werkzeugen, wie Sägeblättern oder dergleichen und bei Folien bzw. Scheiben verwendet, die einseitigen Luftschwingungen oder Antriebsschwingungen ausgesetzt sind. Außerdem wirken durch die Wahl der geeigneten Schichtwerkstoffe die Führungselemente für den Fall der Berührung mit dem zu führenden Werkzeug verschleißbeständig. Es ist zwar ein Luftkissentisch bekannt (DE-U-77 31 677), bei dem in einer Tischplatte Bohrungen vorhanden sind, welche am Ausgang Sinterbronzeeinsätze aufweisen, um dadurch den austretenden Druckluftstrahl zu brechen und eine Belästigung der Bedienungspersonen zu vermeiden. Allerdings wird durch diesen Bronzeeinsatz der Durchgangsquerschnitt der Bohrung in der eingangs beschriebenen Art verkleinert mit den dadurch gegebenen Nachteilen. Ein Vorteil der Erfindung nach Nebenanspruch 9 ist, daß die Kontaktschicht durch Beschichten des Gerüstes mit dieser verbunden ist.

Diese Beschichtung erfolgt in Art thermischen Spritzens, bei dem die Oberfläche des Gerüstes, um eine gute Haftung zu erhalten, bearbeitet wird, bspw. aufgerauht wird, wonach dann in einem Energieprozeß glühende Partikel, entsprechend dem thermischen Spritzen auf das Gerüst aufgebracht werden, die jedoch sofort abkühlen, so daß nur etwa 80°C Temperatur an der Funktionsplatte verbleiben. Hierbei findet ein energetischer Wandel der Kontaktschicht statt, da durch eine Energiequelle ein oder mehrere an- oder aufgeschmolzene Drähte auf den zu beschichtenden Werkstoff geschleudert werden. Hierbei kann vor dem Auftreffen eine physikalisch-chemische Veränderung gesteuert vorgenommen werden. Die aufgetragene Schicht kann auch aus einem Pulverwerkstoff entstehen, in Wandlung durch den Energieprozeß zu der gewünschten porösen Kontaktschicht oder auch anderen weiteren Schichten. In jedem Fall wird eine innige Verbindung zwischen Gerüst und Kontaktschicht erzielt. Die Verbindung zwischen Gerüst und Kontaktschicht besteht danach in einer Art mechanischen Verklammerung in Art von Schrumpfspannungen oder auch Mikroverschweißungen.

Die Anzahl und der Durchmesser der Kapillare kann durch das gleichzeitige Aufbringen von Partikeln, die nach dem Beschichtungsvorgang wieder entfernt werden können, beeinflußt werden. Als Partikel hierfür sind Salze, wie bspw. Flußspat (CaF₂) oder eine Calciumchlorid-Natriumchlorid-Mischung (CaCl₂ - NaCl), aber auch andere Materialien, wie bspw. Zink (Lösen bspw. mittels Salzsäure), die ohne wesentliche Beschädigung der Kontaktschicht oder sonstiger Schichten herausgelöst werden können, geeignet. Die Partikel für die Kontaktschicht oder sonstige Schichten haben bspw. beim thermischen Spritzen Durchmesser von zwischen 5,6 und 45 µm, die der gleichzeitig hiermit verspritzten Partikel für die Kapillare sind entsprechend kleiner, je nach Bedarfsfall.

Nach einer weiteren vorteilhaften Ausgestaltung der Erfindung ist auf der Kontaktschicht mindestens eine zusätzliche Schicht als Sekundärschicht gleichen oder anderen porösen Materials angeordnet. Zusätzlich oder alternativ ist auf der der Kontaktschicht abgewandten Seite des Gerüstes eine Zusatzschicht aus porösem Material vorhanden. Hierdurch kann insbesondere erreicht werden, daß eine solche Funktionsplatte von beiden Seiten her wechselnd oder jeweils für den Einsatz von einem zu filternden Medium angeströmt wird und wobei das poröse Material derart gewählt sein kann, daß das ausgefilterte Material, bspw. der Filterkuchen, sich nicht mit der Funktionsplatte verklebt und leicht entfernt werden kann. So kann auch als poröses Material ein sehr hartes Material, bspw. Keramik oder Hartmetall verwendet werden, um die Funktionsplatte auch mit härteren Reinigungswerkzeugen, wie bspw. Schabern, bearbeiten zu können. So kann die äußerste Kontaktschicht als Deckschicht mit einer harten Oberfläche ausgebildet sein. Es ist denkbar, daß bei mehreren Schichten auf dem Gerüst eine vor allem der gewünschten Feinfilterung zugedachte poröse Schicht vorhanden ist, welche dann durch eine harte Deckschicht geschützt ist. Die Deckschicht kann so gewählt werden, daß sie insbesondere keine Neigung zum Verkleben mit einem Filtrat, wie bspw. Kohlenwasserstoffen, aufweist. Ebenso ist auf Grund der guten Verbindung zwischen Gerüst und den einzelnen Schichten eine Rückspülung unter Druck mit Luft oder Flüssigkeit möglich.

Nach einer weiteren vorteilhaften Ausgestaltung der Erfindung besteht die Kontakt-, Sekundär- und/oder Zusatzschicht aus keramischem Material bzw. sonstigem Material auf Basis von Metall. Bekanntlich weisen gerade diese Stoffe eine sehr feine Porösität auf, wie sie besonders durch die Keramik, nämlich einem aluminiumbasischen Stoff bekannt ist. Besonders für diese Stoffe ist es bekannt, daß sie wenig Neigung zum Verkleben mit einem Filtrat aufweisen und daß sie auch die gewünschte Härte aufweisen.

Nach einer weiteren vorteilhaften Ausgestaltung der Erfindung sind die Kapillarquerschnitte bedarfsgerecht variierbar (siehe Herstellungsverfahren weiter oben). So können auch Kapillarquerschnitte mit einer Feinheit im Bereich unter einem µ-Meter erzielt werden.

Nach einer weiteren vorteilhaften Ausgestaltung der Erfindung besteht das Gerüst aus einem Sieb, nämlich einem Lochblech einer Gewebesiebplatte oder dergleichen, insbesondere aber aus einem Spaltsieb. Dabei wird vorzugsweise die entgegen der normalen Strömungsrichtung gerichtete Oberfläche des Spaltsiebes mit der micro-porösen Kontaktschicht versehen. Maßgebend ist, daß der Sieb einer Trägerfunktion gerecht wird, nämlich als Grundlage für die weiteren Schichten dienen kann. Das Gerüst kann aus Zellulosematerial oder einem Metallgewebe oder einer Metallplatte mit gebohrten oder gestanzten Löchern oder dergleichen bestehen. Vorzugsweise besteht das Gerüst aber aus sich in Stömungsrichtung verjüngenden Elementen, bspw. entsprechend angeordneten Dreikantdrähten, insbesondere aus Metall. Ebenfalls kann das Gerüst aus Glasfasergeweben oder Kohlefaser verstärktem Material bestehen, wobei als Kontaktschicht oder Sekundärschicht ein Zusatzstoff dienen kann, der porös ist, wodurch insgesamt eine sehr stabile Funktionsplatte in Art eines glasfaserverstärken Kunststoffes entstehen kann. Alternativ besteht das Gerüst aus textilem oder zellulosem Material, was insbesondere für den Einsatz der Funktionsplatte bei Nahrungsmitteln, Getränken usw. von Vorteil sein kann. Es ist zwar ein Filterverbundstoff bekannt (DE-A-196 39 752) aus einer porösen Matte aus verdichteten Glasfasern, mit ausreichender Steifheit, die Glasfasern regelloser Orientierung trägt und für einen Gasstrom durchlässig ist. Hauptzweck dieses Filterverbundstoffes auf Basis von Glasfasern ist es, zu verhindern, daß Glasfaserteilchen mit dem zu filternden Material ausgeblasen werden.

Die micro-poröse Beschichtung weist vorzugsweise eine Schichtdicke von mindestens 20 µm, besonders bevorzugt 0,1 mm auf.

Eine weitere vorteilhafte Ausgestaltung der Erfindung bezieht sich auf die Anwendung der Funktionsplatte als Feinfilter für Gase und Flüssigkeiten. Durch entsprechende Wahl der Kapillaren kann die Feinheit der Filterung variiert werden. Eine Ausgestaltung der Erfindung als Feinfilter betrifft bspw. deren Anwendung für Schlämme in der Fertigung der metallverarbeitenden Industrie, bspw. von Schneidölen oder dergleichen. Die Partikelgröße der im Schneidöl vorhandenen Teilchen liegt bei 0,15 bis 0,6 µm und kann im Grenzfall 10% des Schlammes ausmachen. Aufgrund der Filterung durch die erfindungsgemäße Funktionsplatte kann entsprechend viel Schneidöl wiederverwendet werden, was eine enorme Kosteneinsparung und Umweltschonung zur Folge hat. Durch die Wahl des geeigneten Schichtwerkstoffes kann der Feinfilter auch in aggressiven Medien, z.B. Benzin, Lösungsmittel, eingesetzt werden.

Eine weitere vorteilhafte Ausgestaltung der Erfindung bezieht sich auf die Anwendung der Funktionsplatte als Verteiler für flüssige, dampfförmige und/oder gasförmige Medien, sowie Gemische derselben. So kann der Verteiler für dampfförmige und/oder erwärmte Medien in Geräten (z.B. Dampfbügeleisen, Heißmangel) zur Bearbeitung oder Informbringung von flächigen Stoffen, insbesondere Textilien oder Kunststoffen, angewendet werden. Hierbei kann es zu einer Erhöhung der Wirtschaftlichkeit kommen, da bspw. eine komplett dampfdurchlässige Unterfläche eines Bügeleisens zu einer Verkürzung der aufzuwendenden Arbeitszeit führt. Ebenfalls kann eine derartige Funktionsplatte als Verteiler für Öl dienen. Dabei ist eine sehr feine Dosierung und gleichmäßige Zufuhr auch über große Flächen möglich.

Eine weitere vorteilhafte Ausgestaltung der Erfindung betrifft deren Anwendung als Luftkissen für das Tragen und Transportieren von flächigen Gegenständen, wie Folien, Platten, Kartonagen und dergleichen. Besonders bei äußerst oberflächenempfindlichen Teilen oder auch wärmeempflindlichen Teilen hat sich der Luftkissentransport als sehr vorteilhaft herausgestellt. Durch das Luftkissen wird eine direkte Berührung vermieden und damit unnötige Reibkräfte mit ggf. damit verbundener Erwärmung. Auch Geldscheine, Goldfolien und ähnliche Dinge mit hohem Wert, Original-Druckschriften, Aktien und dergleichen können auf diese Weise schadfrei transportiert werden. Der Vorteil bei der Erfindung besteht vor allem darin, daß das entstehende Luftkissen aufgrund der sehr feinen Porösität äußerst gleichmäßig ist und ein seitliches Abtreiben des zu transportierenden Gutes vermieden wird. Neben der Trag- und/oder Führungsfunktion kann die zum Tragen oder Führen dienende Luft oder ein Schmiermittel-Luft-Gemisch während oder nach dem Nutzungsvorgang zum Entfernen von bei der Nutzung anfallenden Abfällen (Späne oder dgl.) dienen.

Alle in der Beschreibung und den nachfolgenden Ansprüchen dargestellten Merkmale können sowohl einzeln als auch in beliebiger Kombination miteinander erfindungswesentlich sein.

## Patentansprüche

1. Funktionsplatte mit Durchlässen zur Nutzung für gasförmige und flüssige Medien, mit einem Durchgangsöffnungen aufweisenden, als Träger dienenden Gerüst und mit einer auf diesem Gerüst angeordneten, mit diesem verbundenen und feinere Durchlässe aufweisenden Kontaktschicht, **dadurch gekennzeichnet, daß** die Kontaktschicht aus einem mittels thermischen Spritzens aufgebrachten, porösen, gasund flüssigkeitsdurchlässigen Material besteht und daß die Kapillaren der Kontaktschicht mit den Durchgangsöffnungen des Gerüstes strömungstechnisch korrespondieren.

2. Funktionsplatte nach Anspruch 1, **dadurch gekennzeichnet, daß** auf der Kontaktschicht mindestens eine zusätzliche Sekundärschicht gleichen oder anderen porösen Materials und/oder auf der der Kontaktschicht abgewandten Seite des Gerüsts eine Zusatzschicht aus porösem Material angeordnet ist.

3. Funktionsplatte nach Anspruch 1 oder 2, **dadurch gekennzeichnet, daß** die Kontakt-, Sekundär- und/oder Zusatzschicht aus keramischem bzw. metallbasischem Material besteht.

4. Funktionsplatte nach einem der vorhergehenden Ansprüche, **dadurch gekennzeichnet, daß** die Kapillarquerschnitte bedarfsgerecht variierbar sind.

5. Funktionsplatte nach einem der vorhergehenden Ansprüche, **dadurch gekennzeichnet, daß** das Gerüst der Funktionsplatte ein Sieb, insbesondere ein Spaltsieb ist, wobei die entgegen der normalen Strömungsrichtung gerichtete Oberfläche mit der micro-porösen Kontaktschicht versehen ist.

6. Funktionsplatte nach Anspruch 5, **dadurch gekennzeichnet, daß** die micro-poröse Kontaktschicht eine Schichtdicke von mindestens 20 µm, vorzugsweise 0,1 mm aufweist.

7. Funktionsplatte nach einem der vorhergehenden Ansprüche, **gekennzeichnet durch** die Anwendung als Feinfilter für Gase und Flüssigkeiten.

8. Verfahren zur Führung von flüssigen, dampfförmigen und/oder gasförmigen Medien sowie Gemische derselben, **gekennzeichnet durch** die Verwendung einer Funktionsplatte nach einem der Ansprüche 1 bis 4.

9. Verfahren nach Anspruch 8, wobei durch das durch die Funktionsplatte austretende Medium dünne Werkzeuge, wie Sägeblätter oder dergleichen, geführt werden, und/oder Schwingungen an diesen Werkzeugen unterbunden werden.

10. Verfahren zur Herstellung einer Funktionsplatte gemäß einem der vorhergehenden Ansprüche 1-7, **dadurch gekennzeichnet, daß** gemeinsam mit den die Kontakt-, Sekundär- und/oder Zusatzschicht bildenden Partikeln dazwischen fein verteilte Partikel auf das Gerüst aufgebracht werden, die nach erfolgtem Beschichten aus der Kontakt-, Sekundär- und/oder Zusatzschicht entfernt werden.

## Claims

1. Function plate with ducts for use for gaseous and liquid substances, having a frame serving as a support, with passage orifices, and a contact coat arranged on this frame, connected with same and having finer ducts, **characterized in that** the contact coat consists of porous gas-permeable and liquid-permeable material applied by means of thermic spraying, and that the capillaries of the contact coat correspond fluid-dynamically with the passage orifices of the frame.

2. Function plate according to Claim 1, **characterized in that** at least one additional secondary coat of the same or another porous material is arranged on the contact coat and/or an additional coat of porous material is arranged on that side of the frame which faces away from the contact coat.

3. Function plate according to Claim 1 or 2, **characterized in that** the contact coat, secondary coat and/or additional coat are made of ceramic or metal-based material.

4. Function plate according to any of the preceding claims, **characterized in that** the capillary cross sections can be adjusted according to requirement.

5. Function plate according to Claim 1, **characterized in that** the frame of the function plate is a screen, in particular a slot screen, its surface, directed against the normal flow direction, bearing the micro-porous contact coat.

6. Function plate according to Claim 5, **characterized in that** the micro-porous contact coat has a thickness of at least 20 micrometers, preferably 0.1 millimeters.

7. Function plate according to any of the preceding claims, **characterized in that** it is used as fine filter for gases and fluids.

8. Procedure for directing fluid, vaporous and/or gaseous media and mixtures thereof, **characterized in that** a function plate according to one of Claims 1 to 4 is used.

9. Procedure according to Claim 8, **characterized in that** thin tools such as saw blades or similar things are moved through the medium issuing from the function plate, and/or **in that** vibrations in these tools are inhibited.

10. Procedure for producing a function plate according to any of the preceding Claims 1 to 7, **characterized in that** when the contact coat, secondary coat and/or additional coat is applied to the frame, thinly distributed particles are interspersed between the particles said coats are made of, said thinly distributed particles particles being removed from the contact coat, secondary coat and/or additional coat once the coat has been completed.

## Revendications

1. Plaque de fonction avec des orifices pour usage pour médiums gazeux et liquides, ayant un cadre avec des orifices de passage et servant comme support, et une couche de contact arrangée sur ce cadre, reliée avec celui-ci et ayant des orifices plus fins, **caractérisée en ce que** la couche de contact consiste d'un matériau poreux perméable au gaz et au liquide appliqué par pulvérisation thermique, et que les capillaires de la couche de contact correspondent fluide-dynamiquement avec les orifices de passage dans le cadre.

2. Plaque de fonction selon la revendication 1, **caractérisée en ce qu'**au moins une deuxième couche supplémentaire du même matériau poreux ou un autre est arrangée sur la couche de contact et/ou qu'une couche supplémentaire de matériau poreux est arrangée sur le côté du cadre qui est éloigné de la couche de contact.

3. Plaque de fonction selon la revendication 1 or 2, **caractérisée en ce que** la couche de contact, la couche secondaire et/ou la couche supplémentaire sont en céramique ou en un matériau à base de métal.

4. Plaque de fonction selon une quelconque des revendications précédentes, **caractérisée en ce que** les coupes transversales des capillaires peuvent être adaptées aux besoins respectifs.

5. Plaque de fonction selon une quelconque des revendications précédentes, **caractérisée en ce que** le cadre de la plaque de fonction est un tamis, en particulier un tamis à fentes, et que sa surface, dirigée à rebours de la direction normale du flux, porte la couche de contact micro-poreuse.

6. Plaque de fonction selon la revendication 5, **caractérisée en ce que** la couche de contact micro-poreuse a une épaisseur d'au moins 20 µm, de préférence 0,1 mm.

7. Plaque de fonction selon une quelconque des revendications précédentes, **caractérisée en ce qu'**elle est utilisée comme filtre fin pour gaz et fluides.

8. Procédé pour diriger des médiums fluides, vaporeux et/ou gazeux et des mélanges de ces médiums, **caractérisé en ce qu'**une plaque de fonction selon l'une des revendications 1 à 4 est utilisée.

9. Procédé selon la revendication 8, dans lequel on fait passer des outils minces tel que des lames de scie ou objets similaires à travers le médium échappant de la plaque de fonction, et/ou dans lequel les vibrations dans de tels outils sont inhibées.

10. Procédé de production d'une plaque de fonction selon une quelconque des revendications précédentes 1 à 7, **caractérisé en ce que** lors de l'application des particules sur le cadre, les particules formant la couche de contact, la couche secondaire et/ou la couche supplémentaire sont parsemés de particules finement distribués qui sont ensuite enlevés de la couche de contact, la couche secondaire et/ou la couche supplémentaire une fois que la pulvérisation est terminée.
